(19) Europäisches Patentamt
European Patent Office
Office européen des brevets

(11) **EP 2 375 229 A1**

(12) **EUROPEAN PATENT APPLICATION**

(43) Date of publication:
**12.10.2011 Bulletin 2011/41**

(51) Int Cl.:
***G01J 3/46*** *(2006.01)*

(21) Application number: **10290193.1**

(22) Date of filing: **09.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Thomson Licensing**
**92130 Issy-les-Moulineaux (FR)**

(72) Inventors:
• **Sarkar, Abhijit**
**92443 Issy-Les-Moulineaux (FR)**
• **Blonde, Laurent**
**92443 Issy-Les-Moulineaux (FR)**
• **Morvan, Patrick**
**92443 Issy-Les-Moulineaux (FR)**

(74) Representative: **Browaeys, Jean-Philippe**
**Technicolor**
**1-5 rue Jeanne d'Arc**
**92130 Issy-les-Moulineaux (FR)**

(54) **Method for the classification of observers according to their visual characteristics**

(57) Preferably, seven classes of observers are defined, according to different sets of Colour Matching Functions. By displaying specific colour patches of a classification chart using image display devices (CRT,LCD) having different sets of primaries, and by asking an actual observer to compare his perception of the same colour as displayed on each image display devices, the method according to the invention allows assigning said observer his specific class.

Fig.9

## Description

The invention relates to a method for the classification of observers according to their visual characteristics.

Various recent studies have shown that variations in observers' colour vision characteristics can be a significant issue in modern display colourimetry, since peaky colour primaries (commonly red, green and blue) are often used to achieve more vivid and saturated colours.

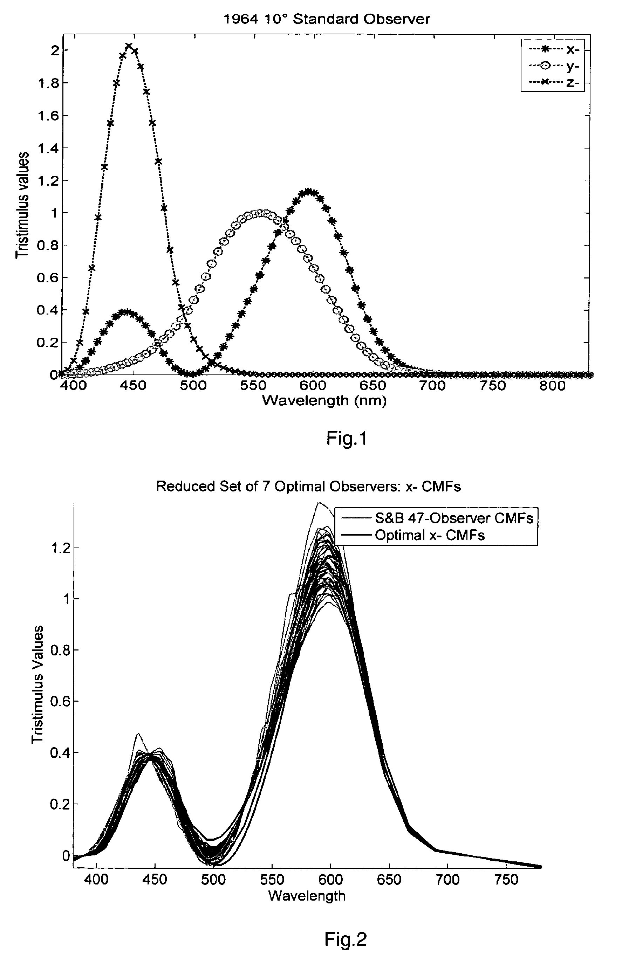

The colour matching functions are very well known as the numerical description of the chromatic response of an observer. The CIE has defined a set of three colour-matching functions ("CMF"), called $x(\lambda)$, $\bar{y}(\lambda)$, and $z(\lambda)$, which can be thought of as the spectral sensitivity curves of three linear light detectors that yield the tristimulus values X, Y, and Z in the CIE XYZ linear visual colour space. There are two sets of standard observer CMFs, depending on the field of view : CIE-1964 10° or CIE-1931 2°. As illustrated on figure 1 for CIE-1964 10°, these three CMF functions are respectively for the long-, medium- and short- wavelength range.

According to basic colorimetry, the tristimulus values (X,Y,Z) as expressed in the CIE-XYZ color space, of a color of an object as perceived by a standard observer are obtained by the integration of the spectral power distribution of a standard light source ($S_\lambda$), the reflectance factor of the object ($R_\lambda$), and the color matching functions of an average, standard observer ($\bar{x}_\lambda$, $\bar{y}_\lambda$ and $\bar{z}_\lambda$). If k is a normalization factor that assigns the luminance of white an arbitrary value of 100, we have the following definitions :

$$X = k \sum_{\lambda} S_\lambda R_\lambda \bar{x}_\lambda \Delta\lambda; \quad Y = k \sum_{\lambda} S_\lambda R_\lambda \bar{y}_\lambda \Delta\lambda; \quad Z = k \sum_{\lambda} S_\lambda R_\lambda \bar{z}_\lambda \Delta\lambda$$

$$k = \frac{100}{\sum_{\lambda} S_\lambda \bar{y}_\lambda \Delta\lambda}$$

Since the tristimulus values (X,Y,Z) are computed by wavelength-wise integration, two colour tristimuli with very different spectral power distribution can give rise to identical visual response for a given observer, leading to a "metameric" colour match. Such a match established by one observer can, and quite often does, lead to a mismatch for a different observer, as the second observer is visually characterized by a set of CMFs that is different from the former. This phenomenon is commonly termed as observer metamerism.

Various recent studies have shown that observer variability can be a significant issue notably in modern display colourimetry. This single set of three CMFs can often be unacceptably different from individual and average observer matches, and vice versa. In recent studies, the mean and maximum values of the standard observer-predicted colour difference between individual observer colour matches were found to be as high as 1.4 and 3.3 $\Delta E^*_{00}$ respectively, as expressed in the Lab color space.

The relevance of the observer variability is obviously quite dependent on the application context. The topic of observer metamerism has sparked renewed interest in the recent years with the proliferation of wide colour-gamut image display devices. Whether based on LED (Light Emitting Diode) or employing laser primaries, all these image display devices compete with each other in achieving more vivid, more saturated and brighter colours: see Ramanath R. (2009), "Minimizing Observer Metamerism in Display System", Colour Res. & Appl., 34(5): pg. 391-398. See also Fairchild M. D. and Wyble D. R. (2007), "Mean Observer Metamerism and the Selection of Display Primaries", Final Program and Proceedings-IS&T/SID Colour Imaging Conference, pg. 151-156, Albuquerque, NM, USA. On the flipside, these image display devices are particularly susceptible to observer variability since their narrow-band (i.e. peaky spectral characteristics) primaries cause noticeable shift in chromaticities of perceived colours with only relatively minor change in the visual characteristics of the observer.

In 1989, the CIE published a report providing a method for evaluating the average values and the range of colour mismatch for a metameric colour pair when an actual observer with normal colour vision is substituted for the so-called "standard observer" of the CIE. Four sets of deviation functions were proposed to characterize the tolerance ellipsoid of colour mismatch resulting from observer metamerism. This method can be used to derive an observer metamerism index, but it does not attempt to derive new sets of CMFs. Further, this method significantly under-predicts observer variability, and was never adopted by the industry.

In a more recent theoretical analysis disclosed by Sarkar A., Blondé L., Le Callet P., Autrusseau F., Stauder J., Morvan P. (2009), in "Study of Observer Variability on Modern Display Colourimetry: Comparison of CIE 2006 Model and 10° Standard Observer" (Final Program and Proceedings, The 11 th Congress of the International Colour Association (AIC) 2009, Sydney, Australia), it was found that the CIE 10˚ standard observer functions, as well as the average observer functions from a recent physiological model (proposed by CIE in 2006), do not accurately predict real observers' CMFs averaged within various age-groups. Because of this prediction error, colours on a narrow-band, wide-gamut display and a broad-band (smooth spectral characteristics) CRT display (Cathode Ray Tube), which are supposed to be matched based on real observer data and actual display spectral characteristics, were predicted to have significant colourimetric differences. The experimental data used in the study came from the most comprehensive colour matching experiments till date, performed by Stiles and Burch in 1959, on which the CIE 10˚ standard observer is based. This analysis showed that when it comes to modern image display devices, the issue of observer variability can cause conventional colourimetry to fail being accurate for a wide range of observers having very different CMFs. The extent of this failure will depend on the spectral characteristics of the display, the specific colours that are being reproduced on the image display device, as well as on the CMFs of the observer viewing the image display device.

It has been found that actual observers may be classified into different classes, for instance seven classes, each class being characterized by a specific class of observers.

An aim of the invention is a method to assign any actual observer to one of these classes and to the corresponding set of CMFs.

For this purpose, the subject of the invention is a method for the classification of an observer over a plurality of classes, each class being characterized by a set of Colour Matching Functions, said method using a classification chart of N colours, each colour being characterized by its specific spectral power distribution, said method comprising the following steps :

1) for each colour of the classification chart characterized by its specific spectral power distribution and its perception,

- using a first set of primaries, displaying a first image of said colour by controlling said primaries with a first set of control values such that said first displayed image is perceived with a given perception by an observer visually characterized by a first set of Colour Matching Functions related to the first class of said plurality,
- using a second set of primaries having a spectral power distribution different from the spectral power distribution of the first set of primaries, displaying a set of second images comprising a second image of said colour for each class of said plurality, each second image which is then associated with a given class of observers being obtained by controlling said primaries of second set with a second set of control values such that said second image is approximately perceived with the same given perception by an observer visually characterized by a set of Colour Matching Functions related to said class,
- asking the observer to find which of his perception of said second images of said set fits the best with his perception of said first image or patch,

2) assigning the observer with the most frequent class among all classes related to the different best fitted second images of all colour of the classification chart.

Advantageously, in the method for the classification of an observer according to the invention, the N observable colours of said classification chart are chosen such that the differences of their perception by observers visually characterized by the different sets of Colour Matching Functions is maximized.

The invention will be more clearly understood on reading the description which follows, given by way of non-limiting example and with reference to the appended figures in which:

- Figure 1, already mentioned, illustrates the well known set of CMFs of the CIE 10˚ standard observer;
- Figures 2, 3 and 4 illustrate seven different sets of CMFs characterizing seven classes of observers cl-1 to cl-7 : figure 2 for the seven x-CMFs, figure 3 for the seven y-CMFs, figure 4 for the seven z-CMFs; the seven reduced sets of CMFs are obtained through a two-step process described in the following pages
- Figure 5 shows the spectral power distribution of the three primaries of the CRT and the LCD used respectively as the reference display device and as the test display device in the experimental setup of figure 7;
- Figure 6 shows an example of a diagram illustrating an embodiment of the method for the classification of observers according to a so-called "sequential test" variant of the invention;
- Figure 7 illustrates an experimental setup that may be used to implement an embodiment of the method for the classification of the observers according to the invention;
- Figure 8 gathers figures 2, 3 and 4 in the same graph, additionally showing the wavelength ranges of high observer variability
- Figure 9 is a diagram illustrating another embodiment of the method for the classification of observers according to a so-called "simultaneous test" variant of the invention.

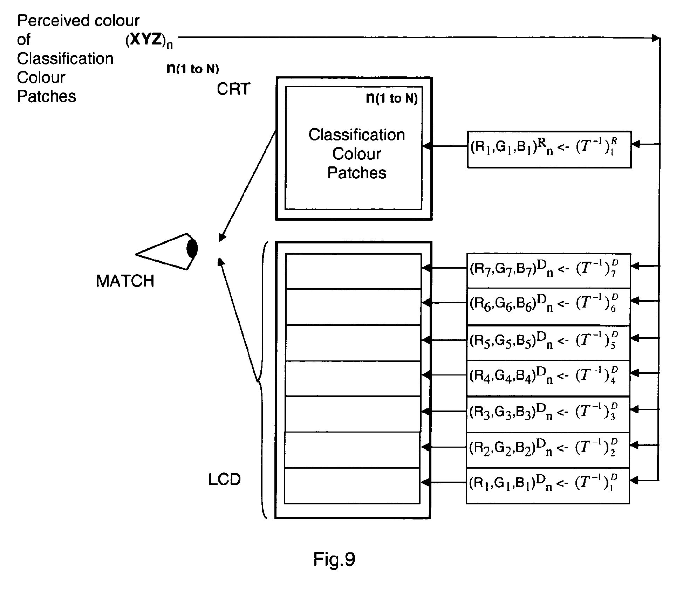

The functions of the various elements shown in the figures, notably figure 9, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. When provided by a software, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU.

$1^{st}$ step : definition of optimal sets of 125 observers, each observer being characterized by a set of 3 CMFs.

By classifying a combined dataset of 47 actual observer CMFs from the 1959 Stiles-Burch study, and 61 simulated CMFs obtained from the more recent CIE 2006 model (i.e. 108 CMFs in all, for a 10˚ field-of-view) using standard mathematical cluster analysis methods ("Partitioning method", also known as "K-means method"), an optimal number of five different sets of x-, y- and z-CMFs, defining 5x5x5 or 125 classes of observers, were found, achieving close to 1 unit of average colour difference prediction error ($\Delta E^*_{00}$) for a standard set of 240 colors, and for 47 Stiles-Burch observers. Instead of having only one standard observer as in the most common prior art, there are now 125 different classes of observers, and each actual observer can be assigned to one of these classes in order to be characterized with the set of CMFs corresponding to this class.

Practically, in the analysis, the total number of variables is 35 (normalized values at 35 wavelengths) and total number of observations is 108. The analysis was performed on LMS cone fundamentals, and the optimal LMS functions were then converted in a manner known per se into CMFs through a 3x3 transformation. A cluster analysis starts with undifferentiated groups and attempts to create clusters of objects (i.e. the CMFs) based on the similarities observed among a set of variables (i.e. CMF values at each wavelength). Variables are selected that maximally discriminate among objects (i.e. the CMFs). Increasing sample sizes result in increased cluster reliability.

The "Partitioning method" (or "K-means method") begins by partitioning the actual data (rather than similarity measures) into a specific number of clusters, and objects are assigned and reassigned in an iterative method to simultaneously minimize intra-cluster variability and maximize inter-cluster variability. This method was used as it is more likely to lead to a robust solution compared to other methods.

In the two-phase computational implementation in Matlab™ software, the first phase used batch updates, in which each iteration consisted of reassigning objects to their nearest cluster centroid, all at once, followed by recalculation of cluster centroids. The second phase used online updates, in which objects were individually reassigned if doing so would reduce the sum of distances, and cluster centroids were recomputed after each reassignment. Each cluster in the partition is defined by its member objects and by its centroid, or center.

Suitable wavelength ranges (i.e. the number of variables) were chosen for L, M and S. Initial cluster centroid locations were selected by dividing 20-80 age range in equal parts and using corresponding CIE-2006 functions. Squared Euclidean distance measure (in LMS space) was used in this analysis. The clustering was repeated 20 times (with same initial cluster centroid positions). Optimal functions were obtained by taking the mean of cluster members.

Each of the derived optimal sets of CMFs was then used to predict 47 Stiles-Burch observer data. The analysis was repeated to derive 3, 4, 5, 6 and 7 optimal sets of CMFs (in each set, one CMF for long-, medium- and short-wavelength range). Based on the accuracy of prediction, as illustrated in Table 1, 5 optimal sets of CMFs was found to be the minimal to meet the goal of achieving close to 1 unit of average colour difference ($\Delta E^*_{00}$) for a wide range of colors, and for all Stiles-Burch observers. With these 5 optimal sets of x-, y- and z- CMFs, there are now 5x5x5, or 125 possible classes of observers. CIELAB colour coordinates were computed for all colour patches of a reference colour chart (as the 240 colour patches of the Colourchecker DC™ reference colour chart) with a CIE illuminant D65, by using i) real Stiles-Burch observer CMF data, ii) CIE 1964 10˚ standard observer functions and iii) all possible combinations of each of the optimal set of CMFs derived from the above cluster analysis. Then, for each observer, colour differences ($\Delta E^*_{00}$) were computed between the CIELAB values obtained from real observer CMFs [case (i)] and those obtained from the predicted CMFs [case (ii) and (iii)]. Thus for each of the 47 Stiles-Burch observer, average colour difference $\Delta E^*_{00}$ is computed out of the 240 patches. Lower the average colour difference, the better is the model prediction.

Average and maximum values of these colour difference $\Delta E^*_{00}$ are shown in Table 1. All combinations of a limited number of CMFs (3 to 7) are compared to CIE 1964 10˚ observer (giving respectively $3^3 = 27$ to $7^3 = 343$ total possibilities). Note that for optimal CMF, the combination yielding best result was considered for individual observers (thus, each of the 47 observers had a corresponding best combination). Then the average or the maximum was computed.

Table 1

| CMFs Under Comparison | ΔE*$_{00}$ Color Difference w.r.t. Real Observer Data (Averaged Over all 47 Observers) | |
|---|---|---|
| | Average ΔE*$_{00}$ for 240 patches | Maximum ΔE*$_{00}$ for 240 patches |
| CIE 1964 10˚ standard observer | 0.9 | 2.1 |
| Optimal 3 (total 27) | 0.7 | 1.5 |
| Optimal 4 (total 64) | 0.6 | 1.5 |
| Optimal 5 (total 125) | 0.5 | 1.1 |
| Optimal 6 (total 216) | 0.4 | 0.7 |
| Optimal 7 (total 343) | 0.5 | 1.0 |

2nd step : definition of a reduced number of 7 optimal observers classes, each class being characterized by a set of 3 CMFs:

Out of the above-mentioned 125 possible combinations of CMFs, several combinations can meet the goal of achieving close to 1 unit of average ΔE*$_{00}$ for a given observer, and the said 240 Colorchecker samples. Thus, for the said constraint, fewer than 125 combinations will suffice for covering all the 47 observers. Thus in this 2nd step, an iterative algorithm was implemented to pick the minimal number of combinations satisfying the average ΔE*$_{00}$ criterion for all 47 observers. The algorithm took into consideration that for some observers with very different color vision characteristics, an average ΔE*$_{00}$ value close to 1 may never be achieved. For each observer, a target ΔE*$_{00}$ was established based on statistical percentiles over all 240 patches. The suitability of a given CMF combination for all the 47 observers was determined by a "CMF Performance Index" (PI), based on average percent deviation from target ΔE*$_{00}$ (a positive PI indicated average ΔE*$_{00}$ was lower than the target). A combination for the reduced set was selected based on the highest number of observers with positive PI as well as the largest value of the PI.

Table 2 shows which of the 125 combinations, and their constituent x-, y-, z- functions were picked for the reduced sets of 7 observer classes. 4 x-CMFs, 3 y-CMFs and 3 z-CMFs constitute the reduced sets. Total number of Stiles-Burch observers assigned to each set, as well as cumulative percent of observers covered are listed. For example, combination 2 is made up of 1st x-CMF, 1st y-CMF and 2nd z-CMF, satisfying the aforementioned ΔE*$_{00}$ criterion for 17 observers, which is 36.2% of Stiles-Burch observer pool. Combination 58 satisfies another 14 observers, so combinations 2 and 58 together satisfy 66% of Stiles-Burch observers, so on and so forth. As shown, these combinations were selected in an iterative process, excluding the observers satisfied by the prior combinations in the subsequent iterations.

Table 2

| Combination No | X-CMF No | Y-CMF No | Z-CMF No | Total Obs | Iteration No | %Obs Covered |
|---|---|---|---|---|---|---|
| 2 | 1 | 1 | 2 | 17 | 1 | 36.2 |
| 58 | 3 | 2 | 3 | 14 | 2 | 66 |
| 6 | 1 | 2 | 1 | 8 | 3 | 83 |
| 33 | 2 | 2 | 3 | 4 | 4 | 91.5 |
| 81 | 4 | 2 | 1 | 2 | 5 | 95.7 |
| 63 | 3 | 3 | 3 | 1 | 6 | 97.9 |
| 76 | 4 | 1 | 1 | 1 | 7 | 100 |
| Total | Observers | | 47 | | | |

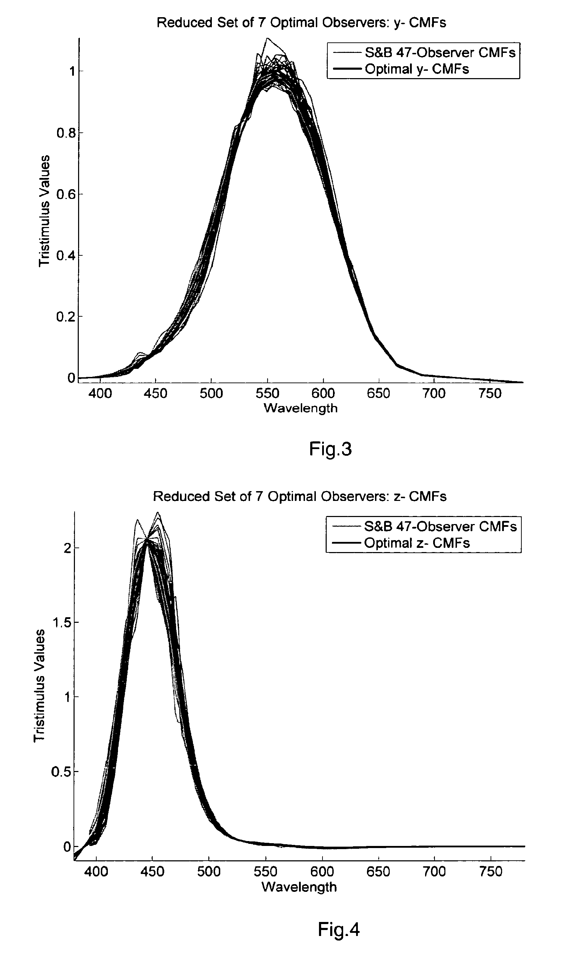

Figures 2, 3 and 4 illustrate these seven optimal sets of CMFs, respectively for 4 x-CMFs, 3 y-CMFs and 3 z-CMFs.

<u>3$^{rd}$ step : method for classifying actual observers over the seven classes of observers, each class being characterized by a set of CMFs.</u>

Based on the above defined seven classes of observers, an embodiment of the method of classification of actual human observers within these seven different classes will now be described.

In order to implement this embodiment, two different image display devices are needed : a reference image display device using a first set of primaries to display images, and a test image display device using a second set of primaries, different from the first one.

To be able to identify differences between colour perception among various observers, according to which, as previously described, one observer with cone spectral sensitivities different from another observer does not have the same color perception as the other observer, the set of primaries of the reference image display device should have a spectral distribution different from the spectral distribution of the set of primaries of the test image display device. For instance, a CRT display device is used for the reference image display device, and an LCD device, preferably with LED backlight, is used as the test image display device.

An example of experimental setup that may be used to implement this embodiment will now be described with more detail.

<u>Example of experimental setup :</u>

- Reference image display device : 32" Sony BVM Cathode Ray Tube (CRT) display, which is widely used as a studio reference display,
- Test image display device : HP DreamColor™ (LP2480zx) Wide-Gamut Liquid Crystal Display (LCD) with LED backlight.

For both image display devices, the luminance of the full white was set close to 97 cd/m$^2$.

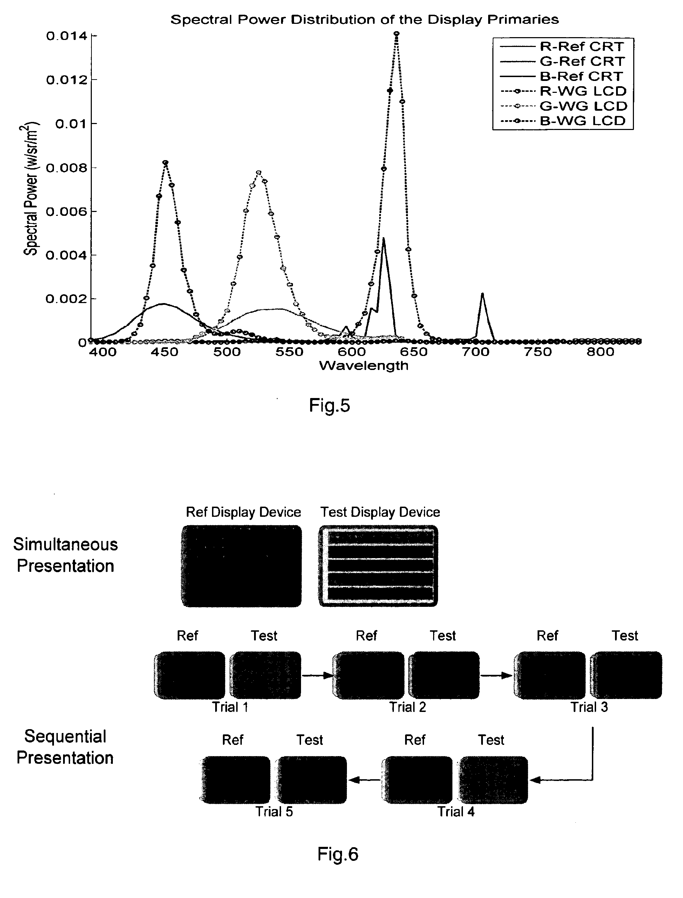

Spectral power distributions of the two displays are illustrated on figure 5, which shows that there is a significant difference between the spectral distribution of the primaries of the two image display devices, so that a colour match made on the two image display devices is highly metameric in nature, justifying the choice of these two image display devices for the observer classification. The LCD is representative of modern wide-gamut displays with peaky primaries. The CRT has a 10-bit HD/SDI input and the LCD has an 8-bit DVI input.

As a reference image display device and/or as a test image display device, the following devices may also be used instead :

- a spectrum generator (e.g. OneLightSpectra or OL-490 systems);
- a multi-primary display (more than 3 primaries);
- a colour patch generator e.g. LED-based;
- a set of fixed spectra generating metameric colour pairs (e.g. colour prints like Ishihara tests, specific emitting material or devices - e.g. fluorescent material or phosphor, or lasers or e.g. laser excited material,...).

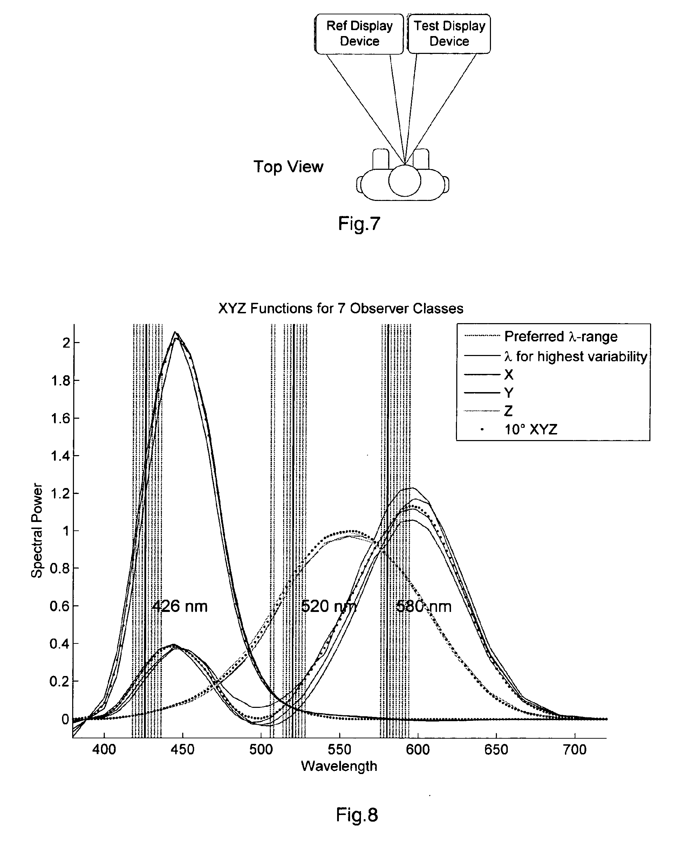

The screens of the reference image display device and of the test image display device were placed side to side as illustrated on figure 7. The observer's visual field consists then of a 10˚ bipartite field, the right half of which was the LCD screen, and the left half was the CRT screen, seen through the mirror. A mask was placed between the observer and the displays to block the view of the displays and the mirror, allowing the observer to see the screen of the LCD on the right side of the field and the screen of the CRT on the left side of the field, when looking at the mask normally. The distance between the observer and the mask was 69.2 cm, and the distance between the mask and the screen of the LCD was 68 cm.

Before performing the classification test, the two image display devices are characterized to know which spectral power distribution (SPD) can be obtained for any triplet (R,G,B) of control values applied to these image display devices.

For characterizing the image display devices for each set i of CMFs, a pair of forward colour transforms and reverse colour transforms are used for each set of CMFs. Using the above definitions of the set of CMFs of the standard observer that allow to compute tristimulus values $(X_0,Y_0,Z_0)$ from any spectral power distribution (SPD) of a color, or to compute the set of control values $(R_0,G_0,B_0)$ that are used to control the image display device to reproduce a color with tristimulus values $(X_0,Y_0,Z_0)$, representing this color as perceived by a standard observer, the two image display devices are then characterized separately for various observers such that :

- for the CRT, $(R,G,B)^R$ - $(T)_i^R$ -> $(X_0,Y_0,Z_0)$, i.e. a forward colour transform $(T)_i^R$ for each set i of CMFs;

- for the LCD, $(R,G,B)^D$ - $(T)_i^D$ -> $(X_0,Y_0,Z_0)$, a forward colour transform $(T)_i^D$ for each set i of CMFs.

- for the CRT, $(SPD)$ -> $(X_0,Y_0,Z_0)$ -> $(T^{-1})_i^R$ -> $(R_i,G_i,B_i)^R$, i.e. a reverse colour transform $(T^{-1})_i^R$ for each set i of CMFs;

- for the LCD, $(SPD)$ -> $(X_0,Y_0,Z_0)$ -> $(T^{-1})_i^D$ -> $(R_i,G_i,B_i)^D$, i.e. a reverse colour transform $(T^{-1})_i^D$ for each set i of CMFs.

From each set of control values $(R,G,B)^R$ and $(R,G,B)^D$, the spectral color distribution of displayed colors, $(SPD)^R_i$ and $(SPD)^D_i$, can be obtained using display characteristics.

The mask of the experimental setup is included in the characterization of the display devices, to account for any spectral absorption or transmission by this mask. At the beginning of each classification session, the luminance of the full-white of both image display devices was measured to ensure that they were close. While both image display devices were found to be quite stable in terms of full white luminance, radiometric data for both displays were collected after each colour match. Thus, the experimental results were independent of the stability of display characterization, or of the assumption of the validity of the display additivity and proportionality. For these radiometric measurements, a PhotoResearch PR-670 spectroradiometer was placed directly behind the observer at the eye level, and the two image display devices were measured in succession. The luminance as well as radiometric uncertainty relative to NIST was $\pm$2% and spectral wavelength uncertainty was less than $\pm$2 nm.

Example of definition of a classification chart of colour patches :

In order to improve the efficiency of the classification method according to the invention, the colour patches that produce the largest colour differences ($\Delta E^*_{00}$) between the seven classes of observers were selected, as described below, from the 240 colour patches of the Colourchecker DC™ reference colour chart, such as to get an efficient classification chart of colour patches.

First, using image display devices characterization data (see above), spectral power distributions (SPDs) were predicted for each n=1 to N colour patch $(CP)_n$ of the 240 colours patches of the Colourchecker DC™ reference colour chart when reproduced on the CRT and on the LCD, as described above in the example of the experimental setup; the set of control values (R,G,B) are computed in the following way:

- for the CRT: $(SPD)_n$ -> $(X_i,Y_i,Z_i)_n$ $(T^{-1})_i^R$ -> $(R_i,G_i,B_i)^R_n$

- for the LCD: $(SPD)_n$ -> $(X_i,Y_i,Z_i)_n$ - $(T^{-1})_i^D$ -> $(R_i,G_i,B_i)^D_n$

By applying these sets of control values, the reproduced colour spectra will then be:

- for the CRT : $(R_i,G_i,B_i)^R_n$ -> $(SPD)^R_{n,i}$ ;
- for the LCD: $(R_i,G_i,B_i)^D_n$ -> $(SPD)^D_{n,i}$.

$(SPD)^R_{n,i}$ and $(SPD)^D_{n,i}$ are then spectral power distributions generating the same perceived (metameric) colour as the "original" spectral power distribution $(SPD)_n$ for the class "i" of observer category, therefore resulting in the same tristimulus values $(X_i,Y_i,Z_i)_n$.

In the following discussion, a "Test colour" refers to a given Colourchecker patch $(CP)_n$ whose spectral reflectance data are known. From the reflectance data, 10° standard observer CMFs and $D_{65}$ illuminant spectral power distribution, tristimulus values $(X_0,Y_0,Z_0)$ are calculated. The reference display (e.g. CRT) inverse model gives a set of control signals (R,G,B) that generate each tristimulus values $(X_0,Y_0,Z_0)$. From this set of control signals, the spectral power distribution $(SPD)^R_n$ of the colour patch $(CP)_n$ displayed on the reference display can be predicted. Multiplying this spectral power distribution $(SPD)^R_n$ with the seven i=1 to 7 "reduced" x-, y-, z-CMF gives the predicted tristimulus values $(X_i,Y_i,Z_i)^R_n$ in each case. In other words, these seven sets of tristimulus values $(X_i,Y_i,Z_i)^R_n$ correspond to different colours as perceived by seven observers whose CMFs match these seven CMF sets. The same reasoning applies for the LCD with the predicted tristimulus values $(X_i,Y_i,Z_i)^D_n$ in each case.

Root-mean-square (rms) distances of each pair of $[(X_i,Y_i,Z_i)^R_n, (X_i,Y_i,Z_i)^D_n]$ tristimulus values signify how close the perceived colours of a given colour patch $(CP)_n$ are in terms of chromaticities for a given set i of CMFs. The variance (square of standard deviation) of these seven root-mean-square distances was used as a metric to determine how suitable is a colour patch for observer classification. High variance indicated more variability among the seven versions of the test colour.

Table 3 lists the first fifteen colour patches ("n" is the number of the colour patch CP as referenced in the reference colour chart) determined to be most suitable as test colours in the experimental setup for observer classification and forming a **classification chart** of colour patches. According to this determination, we found that these test colours are generally mostly different shades of green, green-yellow and blue-green and blue, but no or few shades of red are present.

Table 3

| Rank | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| "n" | 92 | 34 | 153 | 158 | 191 | 49 | 197 | 54 | 196 | 216 | 36 | 39 | 48 | 49 | 211 |

The above results are also corroborated by an additional analysis, in which wavelength regions of x, y and z -CMF functions with highest variability among the seven observer classes were identified, and spectral power distributions of the display primaries were compared with these ranges. Figure 7 gathers the seven sets of x, y and z -CMFs, which are respectively illustrated on figures 2 to 3 and which correspond to the seven classes of observers, including the set of CMFs of the 10˚ standard observer (black dots). Wavelength ranges where x, y and z -CMFs have highest variability are shown as vertical shaded lines. The vertical thin black lines indicate the wavelengths where variances among the CMFs are the largest. From this figure, it can be seen that wavelengths around 580 nm, 520 nm and 426 nm have high variability in case of x, y and z -CMFs respectively. However, the variation in the x-CMFs of observer classes is generally relatively less significant around 625-630 nm, where the red display primaries have sharp peaks. As a result, for colours with significant amount of red, there will generally be less perceptual difference among the seven classes of observers. This explains why selected colours for the classification chart may not include shades of red. This shows why the selection of colour patches that are the most suitable for the classification is dependent on the spectral characteristics of the display primaries. One set of colour patches suitable for observer classification on one image display device may not be appropriate for another image display device. If the primaries of an image display device are known, a set of colour patches suitable for observer classification can be determined using the method outlined above. For a given display device, selected colour patches should generally yield relatively high spectral power in one or more grey vertical lines regions shown in figure 8. Note that these wavelength regions are specific to the optimal CMFs, are thus fundamental, and independent of the displays used.

Example of classification test :

Figure 9 shows a block diagram of an embodiment of the observer calibration method according to the invention, that uses the above defined seven sets of CMFs, each corresponding to a class of observers.

Given the spectral power distribution $(SPD)_n$ of the $n^{th}$ colour patch (out of a total of N colour patches in the classification chart), and the characterization data of the image display devices (see above), triplets (R,G,B) of control signals are computed in order to display the same colour as the colour given by this spectral power distribution $(SPD)_n$ such that :

- for the CRT : only one control signals triplet corresponding to the perception of the 1st class of observer: $(SPD)_n$ ->

$$(X_1,Y_1,Z_1)_n - (T^{-1})_1^R \text{ -> } (R_1,G_1,B_1)^R_n;$$

- for the LCD : seven different control signals triplets corresponding to the perception of the seven classes of observers :

$$(SPD)_n \text{ -> } (X_i,Y_i,Z_i)_n - (T^{-1})_i^D \text{ -> } (R_i,G_i,B_i)^D_n, \text{ for i=1 to 7.}$$

Then, using the experimental setup as described above, each $(CP)_n$ of the 1 to N colour patches of the classification chart is successively displayed of both image display devices as follows:

- for the CRT, the whole screen will display the same colour obtained, by applying the same triplet $(R_1,G_1,B_1)^R_n$ of control signals over the whole screen;
- the screen of the LCD being divided into seven equal colour stripes, in each stripe is displayed with a different colour by applying respectively each of the seven different triplets $(R_i,G_i,B_i)^D_n$ of control signals.

Being seated before the mask of the experimental setup, the actual observer to classify is then asked to compare each i=1 to 7 of the coloured stripes displayed by the LCD with the coloured screen displayed by the CRT. The number i of the matching stripe is then registered as corresponding, for this specific colour patch $(CP)_n$, to the class i of the observer. In summary, one colour is displayed on the CRT and seven versions of the same colour are displayed on the LCD, one of which should ideally give the best match for a given observer. For example, an observer whose CMFs are closer to the set of CMFs of the first class than other set of CMFs, will find the 1st version (i.e. i=1) of the patch on LCD to be the closest match to the colour displayed on the CRT. Similarly, an observer whose CMFs to the set of CMFs of the second class than other set of CMFs, will find the 2nd version (i.e. i=2) to be the best match to the CRT colour, so on and so forth.

If the above simultaneous display of the different colour by applying respectively each of the seven different triplets $(R_i,G_i,B_i)^D_n$ of control signals is an option illustrated on figure 9, another preferred option would be the sequential display of these seven versions of the same colour patch on the LCD i.e. seven consecutive trials as illustrated on the block diagram of figure 6, to finally get the same results concerning the closest match.

Based on observer's selections for each of the displayed colour patches of the classification chart, one of the seven classes of observer CMFs that best correspond to this observer can be identified as being the class to which this observer belongs.

An example of matching results is given in table 4 for a given observer : the line "match" gives the number i of the best matching stripe displayed by the LCD for the 15 colour patches selected in table 2. From this results, the given observer is classified in class 3 (i.e. i=3) and is considered as being characterized by the set of CMFs corresponding to this class.

Table 4

| CP:"n" | 137 | 136 | 147 | 115 | 170 | 117 | 169 | 171 | 144 | 134 | 127 | 135 | 118 | 116 | 113 |
|--------|-----|-----|-----|-----|-----|-----|-----|-----|-----|-----|-----|-----|-----|-----|-----|
| Match  | 2   | 3   | 3   | 4   | 3   | 5   | 3   | 3   | 4   | 5   | 3   | 3   | 1   | 3   | 3   |

As a conclusion, the invention allows to assign any actual observer to one of above-defined classes and to its corresponding set of CMFs. The invention may also applied to any other classification of actual observers according a set of CMFs.

More generally, this invention will enable a large range of observers having large variations of CMFs to have very similar perception of colours, allowing true comparison of these perceptions.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skilled in the art. It is to be understood that the invention may be implemented in various forms of hardware, software, firmware, special purpose processors, or combinations thereof.

**Claims**

1. Method for the classification of an observer over a plurality of classes (CI-1 to CI-(M)), each class (CI-i) being **characterized by** a set of Colour Matching Functions $(CMFs)_i$, said method using a classification chart of N colours $(CP)_{n=1 \text{ to } N}$, each colour $(CP)_n$ being **characterized by** its specific spectral power distribution $(SPD)_n$, said method comprising the following steps :

   1) for each colour $(CP)_n$ of the classification chart **characterized by** its specific spectral power distribution $(SPD)_n$ and its perception $(P)_n$,

      - using a first set of primaries, displaying a first image of said colour $(CP)_n$ by controlling said primaries with a first set of control values $(R_1,G_1,B_1)^{R}{}_1$ such that said first displayed image is perceived with a given perception by an observer visually **characterized by** a first set of Colour Matching Functions $(CMFs)_1$ related to the first class (CI-1) of said plurality,
      - using a second set of primaries having a spectral power distribution different from the spectral power distribution of the first set of primaries, displaying a set of second images comprising a second image of said colour $(CP)_n$ for each class (CI-i) of said plurality, each second image which is then associated with a given class (CI-i) of observers being obtained by controlling said primaries of second set with a second set of control values $(R_i,G_i,B_i)D_n$ such that said second image is approximately perceived with the same given perception by an observer visually **characterized by** a set of Colour Matching Functions $(CMFs)_i$ related to said class (CI-i),
      - asking the observer to find which of his perception of said second images $(R_{i=1 \text{ to } M}, G_{i=1 \text{ to } M}, B_{i=1 \text{ to } M})^{D}{}_n$ of said set fits the best with his perception of said first image or patch,

   2) assigning the observer with the most frequent class among all classes related to the different best fitted second images of all colour $(CP)_{n=1 \text{ to } N}$ of the classification chart.

2. Method for the classification of an observer according to claim 1, wherein the N observable colours of said classification chart are chosen such that the differences of their perception by observers visually **characterized by** the different sets of Colour Matching Functions $(CMFs)_{i=1 \text{ to } M}$ is maximized.

1964 10° Standard Observer

Fig.1

Reduced Set of 7 Optimal Observers: x- CMFs

Fig.2

Reduced Set of 7 Optimal Observers: y- CMFs

Fig.3

Reduced Set of 7 Optimal Observers: z- CMFs

Fig.4

Fig.5

Fig.6

Top View

Fig.7

XYZ Functions for 7 Observer Classes

Legend:
- Preferred λ-range
- λ for highest variability
- X
- Y
- Z
- 10° XYZ

426 nm   520 nm   580 nm

Spectral Power vs Wavelength

Fig.8

Fig.9

Europäisches
Patentamt

European
Patent Office

Office européen
des brevets

# EUROPEAN SEARCH REPORT

Application Number

EP 10 29 0193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASAHIRO YAMAGUCHI ET AL: "Color image reproduction based on the multispectral and multispectral and multiprimary imaging: Experimental evaluation" PROCEEDINGS OF THE INTERNATIONAL SOCIETY FOR OPTICAL ENGINEERING (SPIE), SPIE, USA, vol. 4663, 1 January 2002 (2002-01-01), pages 15-26, XP002311068 ISSN: 0277-786X * page 24 - page 25 * | 1,2 | INV. G01J3/46 |
| X | PÉREZ-OCÓN F ET AL: "Contribution to the experimental review of the colorimetric standard observer" COLOR RESEARCH AND APPLICATION, JOHN WILEY & SONS INC. NEW YORK, US LNKD- DOI:_, vol. 24, no. 5, 1 October 1999 (1999-10-01), pages 377-388, XP002535433 ISSN: 0361-2317 * the whole document * | 1,2 | |
| A | US 2009/257648 A1 (EDGE CHRISTOPHER J [US]) 15 October 2009 (2009-10-15) * the whole document * | 1,2 | TECHNICAL FIELDS SEARCHED (IPC) G01J G09G |
| A | RAMANATH R: "Minimizing observer metamerism in display systems" COLOUR RESEACH AND APPLICATION, vol. 34, no. 5, 4 August 2009 (2009-08-04) , pages 391-398, XP002594590 * the whole document * | 1,2 | |

-/--

The present search report has been drawn up for all claims

| Place of search | Date of completion of the search | Examiner |
|---|---|---|
| Munich | 30 July 2010 | Besser, Veronika |

EPO FORM 1503 03.82 (P04C01)

Europäisches
Patentamt

European
Patent Office

Office européen
des brevets

## EUROPEAN SEARCH REPORT

Application Number

EP 10 29 0193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SARKAR A ET EL: "Study of Observer Variability in Modern Display Colorimetry: Comparison of CIE 2006 Model and 10° Standard Observer" 11TH CONGRESS OF THE INTERNATIONAL COLOUR ASSOCIATION (AIC), October 2009 (2009-10), pages 1-4, XP002594645 * the whole document * ----- | 1,2 | |

TECHNICAL FIELDS
SEARCHED     (IPC)

The present search report has been drawn up for all claims

| Place of search | Date of completion of the search | Examiner |
|---|---|---|
| Munich | 30 July 2010 | Besser, Veronika |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................
& : member of the same patent family, corresponding
   document

EPO FORM 1503 03.82 (P04C01)

**EP 2 375 229 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAMANATH R.** Minimizing Observer Metamerism in Display System. *Colour Res. & Appl.,* 2009, vol. 34 (5), 391-398
- **FAIRCHILD M. D. ; WYBLE D. R.** Mean Observer Metamerism and the Selection of Display Primaries. *Final Program and Proceedings-IS&T/SID Colour Imaging Conference,* 2007, 151-156

- **SARKAR A. ; BLONDÉ L. ; LE CALLET P. ; AUTRUSSEAU F. ; STAUDER J. ; MORVAN P.** Study of Observer Variability on Modern Display Colourimetry: Comparison of CIE 2006 Model and 10˚ Standard Observer. *Final Program and Proceedings, The 11 th Congress of the International Colour Association (AIC,* 2009